# EUROPÄISCHE PATENTSCHRIFT

(11) **EP 1 716 315 B1**
(45) Veröffentlichungstag und Bekanntmachung des Hinweises auf die Patenterteilung: **27.10.2010**
(21) Anmeldenummer: 05706759.7
(22) Anmeldetag: 10.02.2005
(51) Int. Cl.: G05B 19/408

(54) **VERFAHREN ZUR FERTIGUNG ANGEPASSTER, STRÖMUNGSTECHNISCHER OBERFLÄCHEN**
METHOD FOR PRODUCING ADAPTED FLOW SURFACES
PROCEDE DE FABRICATION DE SURFACES ADAPTEES RELEVANT DE LA TECHNIQUE DES FLUIDES

(30) Priorität: 19.02.2004 DE 102004008027
(43) Veröffentlichungstag der Anmeldung: 02.11.2006
(73) Patentinhaber: MTU Aero Engines GmbH, 80995 München (DE)
(72) Erfinder: GLÄSSER, Arndt, 85221 Dachau (DE); HEINRICH, Stefan, 82276 Adelshofen (DE)
(86) Internationale Anmeldenummer: PCT/DE2005/000222
(87) Internationale Veröffentlichungsnummer: WO 2005/080754

(56) Entgegenhaltungen:
- EP-A- 0 453 391
- US-A- 4 382 215
- US-A- 4 755 952

## Beschreibung

Die Erfindung betrifft ein Verfahren zur Fertigung angspasster, strömungstechnischer Oberflächen.

Gasturbinenschaufeln, insbesondere solche für Flugtriebwerke, werden in der Regel als Schmiedeteile angefertigt, wobei die Gasturbinenschaufeln im Bereich ihrer Strömungseintrittskante sowie Strömungsaustrittskante ein Übermaß aufweisen. Sollen derartige Gasturbinenschaufeln zum Beispiel zur Herstellung eines integral beschaufelten Rotors, eines sogenannten Blisk (bladed disk) oder Bling (bladed ring), verwendet werden, so müssen die Gasturbinenschaufeln im Bereich ihrer Strömungseintrittskante sowie Strömungsaustrittskante vor der Verbindung derselben mit dem Rotor zur Bereitstellung angepasster, strömungstechnischer Oberflächen im Bereich der Strömungseintrittskante sowie der Strömungsaustrittskante bearbeitet werden.

Nach dem Stand der Technik erfolgt die Bearbeitung der Gasturbinenschaufeln zur Fertigung angepasster, strömungstechnischer Oberflächen im Bereich der Strömungseintrittskante sowie Strömungsaustrittskante dadurch, dass die Gasturbinenschaufeln zum Abtragen des Materialüberschusses vorgefräst werden und anschließend ein manuelles Verrunden erfolgt, um strömungstechnische Oberflächen im Bereich der Strömungseintrittskante sowie Strömungsaustrittskante zu gewährleisten. Das manuelle Verrunden ist zeitaufwendig, kostspielig und nicht reproduzierbar. Ein manuelles Verrunden von Gasturbinenschaufeln zur Bereitstellung angepasster, strömungstechnischer Oberflächen im Bereich der Strömungseintrittskante sowie Strömungsaustrittskante ist demnach insgesamt von Nachteil.

Die DE 199 22 012 Cl betrifft ein verfahren zur Fertigung angepasster, strömungstechnischer Oberflächen an integral beschaufelten Rotoren. Das dort beschriebene Verfahren kommt zum Einsatz, nachdem Gasturbinenschaufeln im Bereich ihrer Strömungseintrittskanten sowie Strömungsaustrittskanten manuell verrundet und mit dem Rotor stoffschlüssig zusammengefügt worden sind. Das Verfahren gemäß DE 199 22 012 Cl dient der Bearbeitung der an den Rotor gefügten Gasturbinenschaufeln im Bereich der Schaufelblätter, also im Bereich einer Saugseite sowie Druckseite derselben. Es dient hingegen nicht der Fertigung strömungstechnischer Oberflächen im Bereich der Strömungseintrittskante sowie Strömungsaustrittskante von Gasturbinenschaufeln vor dem stoffschlüssigen Zusammenfügen der Gasturbinenschaufeln mit einem Rotor.

Aus der EP 0 453 391 A2 ist ein Verfahren zur Fertigung einer Gasturbinenschaufel bekannt, bei dem eine Strömungseintritts- oder Strömungsaustrittskante mittels einem an die Krümmung der Gasturbinenschaufel im Bereich der Strömungseintritts- oder Strömungsaustrittskante angepasstem Schneidwerkzeug verrundet wird. Bei dieser Lösung ist ein speziell angepasstes Werkzeug zur Bearbeitung der Gasturbinenschaufel erforderlich.

Hiervon ausgehend liegt der vorliegenden Erfindung das Problem zu Grunde, ein neuartiges Verfahren zur Fertigung angepasster, strömungstechnischer Oberflächen zu schaffen.

Dieses Problem wird durch ein Verfahren zur Fertigung angepasster, strömungstechnischer Oberflächen gemäß Patentanspruch 1 gelöst. Erfindungsgemäß umfasst das Verfahren zumindest die folgenden Schritte: a) Erzeugen eines Nominalfräsprogramms zur Fertigung strömungstechnischer Oberflächen im Bereich einer Strömungseintrittskante und/oder einer Strömungsaustrittskante für eine ideale Gasturbinenschaufel; b) Vermessen einer realen Gasturbinenschaufel im Bereich einer Strömungseintrittskante und/oder einer Strömungsaustrittskante derselben; c) Erzeugen eines an die reale Gasturbinenschaufel angepassten Fräsprogramms zur Fertigung strömungstechnischer Oberflächen im Bereich der Strömungseintrittskante und/oder der Strömungsaustrittskante für die reale Gasturbinenschaufel, wobei im Schritt b) ermittelte Messwerte zur Anpassung bzw. Änderung des in Schritt a) erzeugten Nominalfräsprogramms in das Fräsprogramm für die reale Gasturbinenschaufel verwendet werden; d) Fertigen der strömungstechnischen Oberflächen an der realen Gasturbinenschaufeln im Bereich der Strömungseintrittskante und/oder der Strömungsaustrittskante durch Fräsen unter Verwendung des in Schritt c) erzeugten Fräsprogramms, wobei in einem ersten Teilschritt durch Grobfräsen, insbesondere durch Schruppen, Material im Bereich der Strömungseintrittskante und/oder der Strömungsaustrittskante abgetragen wird, und wobei in einem sich hieran anschließenden zweiten Teilschritt durch Feinfräsen, insbesondere durch Schlichten, die Strömungseintrittskante und/oder die Strtimungsaustrittskante automatisch verrundet wird, wobei das Nominalfräsprogramm für den Bereich der Strömungseintrittskante und/oder den Bereich der Strömungsaustrittskante mehrere Nominalfräsbahnen umfasst, nämlich jeweils eine Nominalfräsbahn im Bereich der saugseite, jeweils eine Nominalfräsbahn im Bereich der Druckseite und jeweils mindestens eine zwischen diesen beiden Nominalfräsbahnen geschaltete Nominalfräsbahn zwischen der Saugseite und der Druckseite, wobei jede der Nominalfräsbahnen mehrere Nominalbahnpunkte umfasst.

Im Sinne der hier vorliegenden Erfindung wird ein Verfahren vorgeschlagen, mithilfe dessen Gasturbinenschaufeln im Bereich ihrer Strömungseintrittskante sowie Strömungsaustrittskante voll automatisiert bearbeitet werden können. Im Sinne der hier vorliegenden Erfindung erfolgt das Abtragen von Material im Bereich der Strömungseintrittskante und Strömungsaustrittskante sowie das Verrunden derselben voll automatisch durch Fräsen, sodass auf das nach dem Stand der Technik erforderliche, manuelle Verrunden von Hand verzichtet werden kann. Hierdurch wird der Zeitaufwand sowie Kostenaufwand bei der Herstellung strömungstechnischer Oberflächen an Gasturbinenschaufeln deutlich reduziert. Weiterhin lassen sich reproduzierbare Fertigungsergebnisse erzielen.

Nach einer vorteilhaften Weiterbildung der Erfindung wird die reale Gasturbinenschaufel derart vermessen, dass im Bereich der Strömungseintrittskante und im Bereich der Strömungsaustrittskante an einer Saugseite und an einer Druckseite der Gasturbinenschaufel jeweils eine Messpunktreihe ermittelt wird, wobei jede dieser vier Messpunktreihen aus mehreren über die Höhe bzw. Länge der Strömungseintrittskante bzw. der Strömungsaustrittskante verteilten Messpunkten gebildet ist. Die im Bereich der Saugseite ermittelten Messpunktreihen werden zur Änderung der die Strömungseintrittskante und die Strömungsaustrittskante betreffenden Nominalfräsbahnen im Bereich der Saugseite derart verwendet, dass jeder Nominalbahnpunkt dieser Nominalfräsbahnen, für den ein entsprechender Messpunkt vorliegt, um den Betrag der Abweichung zwischen der idealen Gasturbinenschaufel und der realen Gasturbinenschaufel im Bereich der Saugseite verschoben wird. Für Nominalbahnpunkte dieser Nominalfräsbahnen, für die kein entsprechender Messpunkt vorliegt, wird eine Interpolation durchgeführt. Für die Druckseite wird analog vorgegangen. Für zwischen den Nominalfräsbahnen der Saugseite und den Nominalfräsbahnen der Druckseite vorliegende Nominalfräsbahnen wird zur Anpassung derselben an die reale Gasturbinenschaufel ebenfalls eine Interpolation durchgeführt.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

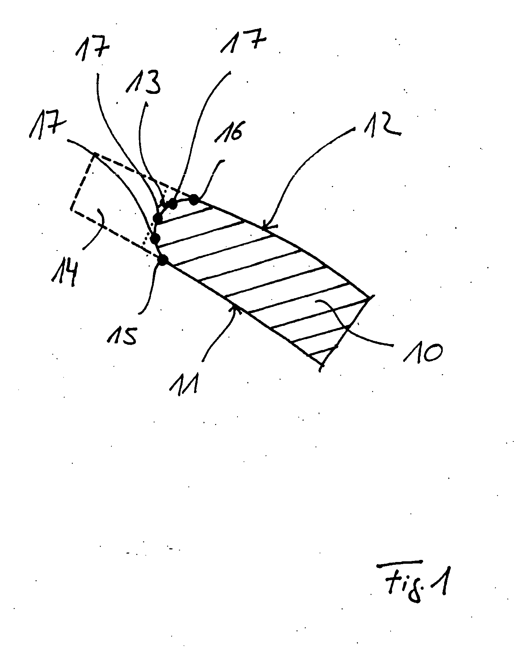

- Fig. 1: einen Ausschnitt aus einem schematisieren Querschnittsprofil einer Gasturbinenschaufel im Bereich einer Strömungseintritts- kante der Gasturbinenschaufel.

Nachfolgend wird die hier vorliegende Erfindung unter Bezugnahme auf Fig. 1 in größerem Detail beschrieben.

Fig. 1 zeigt einen Ausschnitt aus einer Gasturbinenschaufel 10 im Querschnitt. So ist in Fig. 1 eine Druckseite 11 sowie eine Saugseite 12 der Gasturbinenschaufel 10 sowie eine Strömungseintrittskante 13 derselben gezeigt, welche einen Übergang zwischen der Druckseite 11 sowie der Saugseite 12 der Gasturbinenschaufeln 10 bereitstellt. Eine am gegenüberliegenden Ende der Gasturbinenschaufel 10 vorhandene Strömungsaustrittskante, die ebenfalls einen Übergang zwischen der Druckseite 11 und der Saugseite 12 bereitstellt, ist in Fig. 1 nicht dargestellt.

Wie Fig. 1 entnommen werden kann, verfügt die vorzugsweise als Schmiedeteil ausgebildete Gasturbinenschaufel 10 im Bereich ihrer Strömungseintrittskante 13 im Rohzustand über ein Übermaß 14. Es liegt nun im Sinne der hier vorliegenden Erfindung, ein Verfahren zur Fertigung angepasster, strömungstechnischer Oberflächen an Gasturbinenschaufeln im Bereich ihrer Strömungseintrittskante sowie Strömungsaustrittskante vorzuschlagen, mithilfe dessen einerseits das Übermaß 14 automatisiert entfernt wird und mithilfe dessen andererseits nach dem Entfernen des Übermaßes 14 ein automatisches Verrunden der Gasturbinenschaufel 10 im Bereich der Strömungseintrittskante sowie Strömungsaustrittskante erfolgt, um so voll automatisch ohne manuelle Bearbeitung angepasste, strömungstechnische Oberflächen im Bereich der Strömungseintrittskante sowie der Strömungsaustrittskante zu fertigen.

Im Sinne des erfindungsgemäßen Verfahrens wird in einem ersten Schritt ein Nominalfräsprogramm zur Fertigung strömungstechnischer Oberflächen im Bereich einer Strömungseintrittskante sowie einer Strömungsaustrittskante für eine ideale Gasturbinenschaufel erzeugt. Das Nominalfräsprogramm umfasst sowohl im Bereich der Strömungseintrittskante als auch im Bereich der Strömungsaustrittskante für die ideale Gasturbinenschaufel mehrere Nominalfräsbahrten. So liegen sowohl im Bereich der Strömungseintrittskante als auch im Bereich der Strömungsaustrittskante jeweils eine Nominalfräsbahn im Bereich der Saugseite, jeweils eine Nominalfräsbahn im Bereich der Druckseite, sowie vorzugsweise mehrere zwischen diesen beiden Nominalfräsbahnen geschaltete Nominalfräsbahnen für den Übergangsbereich zwischen der Saugseite und der Druckseite vor. Jede dieser Nominalfräsbahnen für die ideale Gasturbinenschaufel umfasst mehrere Nominalbahnpunkte.

Um nun dieses Nominalfräsprogramm für die ideale Gasturbinenschaufel an eine reale Gasturbinenschaufel anzupassen, wird in einem zweiten Schritt eine reale, im Bereich der Strömungseintrittskante sowie der Strömungsaustrittskante zu bearbeitende Gasturbinenschaufel vermessen. Die reale Gasturbinenschaufeln wird dabei derart vermessen, dass sowohl in Bereich der Strömuneseintrittskante als auch in Bereich der Strömungsaustrittskante an der Saugseite sowie an der Druckseite der Gasturbinenschaufel jeweils eine Messpunktreihe ermittelt wird. Demzufolge werden demnach insgesamt vier Messpunktreihen ermittelt. Eine Messpunktreihe für die Strömungseintrittskante im Bereich der Druckseite, eine Messpunktreihe für die Strömungseintrittskante im Bereich der Saugseite, eine Messpunktreihe für die Strömungsaustrittskante im Bereich der Druckseite sowie eine weitere Messpunktreihe für die Strömungsaustrittskante im Bereich der Saugseite. Jede dieser vier Messpunktreihen verfügt über eine Vielzahl von Messpunkten, die über die Höhe bzw. Länge der Strömungseintrittskante sowie der Strömungsaustrittskante verteilt sind. Die bei der Vermessung der realen Gasturbinenschaufel ermittelten Messpunktreihen werden in einem dritten Schritt zur Anpassung des Nominalfräsprogramms an die reale Gasturbinenschaufel und damit zur Ermittlung eines Fräsprogramms für die Gasturbinenschaufel verwendet.

Nach dem Vermessen der realen Gasturbinenschaufeln wird demnach ein an die reale Gasturbinenschaufel angepasstes Fräsprogramm zur Fertigung strömungstechnischer Oberflächen in Bereich der Strömungseintrittskante sowie der Strömungsaustrittskante der realen Gasturbinenschaufel erzeugt, wobei die bei der Vermessung der realen Gasturbinenschaufel ermittelten Messwerte bzw. Messpunktreihen zur Änderung des für die ideale Gasturbinenschaufel erzeugten Nominalfräsprogramms verwendet werden. Hierzu werden demnach einerseits das Nominalfräsprogramm und andererseits die bei der Vermessung der realen Gasturbinenschaufel ermittelten Messwerte derart miteinander verrechnet, dass als Ergebnis ein Fräsprogramm für die reale Gasturbinenschaufel vorliegt.

Zur Vereinfachung der Darstellung des erfindungsgemäßen Verfahrens soll nachfolgend davon ausgegangen werden, dass zur Fertigung strömungstechnischer Oberflächen im Bereich der in Fig. 1 dargestellten Strömungseintrittskante 13 der realen Gasturbinenschaufel 10 ein Fräsprogramm mit insgesamt fünf Fräsbahnen ermittelt wird, nämlich mit einer Fräsbahn 15 im Bereich der Druckseite 11, mit einer Fräsbahn 16 im Bereich der Saugseite 12 sowie mit insgesamt drei zwischen diesen beiden Fräsbahnen 15 und 16 geschalteten Fräsbahnen 17 für den Übergang zwischen der Druckseite 11 und der Saugseite 12. Diese fünf Fräsbahnen 15, 16 und 17 werden, wie bereits oben dargestellt, einerseits aus den entsprechenden Nominalfräsbahnen der idealen Gasturbinenschaufel sowie aus zwei Messpunktreihen erzeugt, die sich aus einer Vermessung der realen Gasturbinenschaufel an der Strömungseintrittskante 13 im Bereich der Saugseite 12 sowie der Druckseite 11 ergeben.

Zur Ermittlung der Fräsbahn 15 im Bereich der Druckseite 11 der realen Gasturbinenschaufel 10 wird nun im Sinne der Erfindung die korrespondierende Nominalfräsbahn der idealen Gasturbinenschaufel mit der im Bereich der Strömungseintrittskante 13 an der Druckseite 11 ermittelten Messpunktreihe verrechnet. Hierzu wird für jeden vorhandenen Messpunkt eine Abweichung zwischen der idealen Gasturbinenschaufel und der realen Gasturbinenschaufel ermittelt. So dann wird für jeden Nominalbahnpunkt der korrespondierenden Nominalfräsbahn, für welchen ein entsprechender Messpunkt vorliegt, der Nominalbahnpunkt um den Betrag der Abweichung zwischen der idealen Gasturbinenschaufel und der realen Gasturbinenschaufel verschoben. Für Nominalbahnpunkte, für welche kein entsprechender Messpunkt vorliegt, erfolgt eine Interpolation, nämlich eine Spline-Interpolation, zwischen den Nominalbahnpunkten, für die entsprechende Messwerte vorliegen. Auf diese Art und Weise wird demnach die Fräsbahn 15 für die Strömungseintrittskante 13 im Bereich der Druckseite 11 ermittelt.

Entsprechend wird bei der Ermittlung der Fräsbahn 16 im Bereich der Saugseite 12 vorgegangen. Auch für diese Fräsbahn 16 wird eine korrespondierende Nominalfräsbahn mit der Messpunktreihe für die Strömungseintrittskante 13 im Bereich der Saugseite 12 verrechnet. Die im Bereich der Saugseite 12 ermittelte Messpunktreihe der Strömungseintrittskante 13 wird dabei derart zur Änderung der jeweiligen Nominalfräsbahn verwendet, dass jeder Nominalbahnpunkt der jeweiligen Nominalfräsbahn, für den ein entsprechender Messpunkt vorliegt, um den Bereich der Abweichung zwischen der idealen Gasturbinenschaufel und der realen Gasturbinenschaufel im Bereich der Saugseite 12 verschoben wird. Für Nominalbahnpunkte der jeweiligen Nominalfräsbahn, für.die kein entsprechender Messpunkt vorliegt, wird wiederum eine Spline-Interpolation durchgeführt. Auf diese Art und Weise wird demnach die Fräsbahn 16 für die Strömungseintrittskante 13 im Bereich der Saugseite 12 erzeugt.

Wie bereits oben erwähnt, sind zur Fertigung der Strömungseintrittskante 13 im Ausführungsbeispiel der Fig. 1 insgesamt fünf Fräsbahnen 15, 16 und 17 erforderlich, wobei jedoch lediglich für die Fräsbahnen 15 und 16 im Bereich der Druckseite 11 bzw. Saugseite 12 Messpunktreihen vorliegen. Für die Nominalfräsbahnen, die den Übergangsbereich zwischen der Druckseite 11 und der Saugseite 12 betreffen, liegen keine derartigen Messpunktreihen vor. Daher werden zur Ermittlung der F7Cäsbahnen 17 der realen Gasturbinenschaufel, die der Fertigung der Oberflächen im Übergangsbereich zwischen Druckseite 11 und Saugseite 12 dienen, Interpolationen zwischen den Messpunktreihen im Bereich der Druckseite 11 sowie Saugseite 12 durchgeführt. Auch hierbei handelt es sich um Spline-Interpolationen.

Die auf die obige Art und Weise aus den Nominalfräsbahnen der idealen Gasturbinenschaufel und den Messpunktreihen der realen Gasturbinenschaufel ermittelten Fräsbahnen für die reale Gasturbinenschaufel bilden ein Fräsprogramm, wobei unter Verwendung dieses Fräsprogramms in einem vierten Schritt die strömungstechnischen Oberflächen an der realen Gasturbinenschaufel gefertigt werden.

In einem ersten Teilschritt erfolgt dabei durch Grobfräsen das Entfernen des Übermaßes 14; in einem nachgeschalteten, zweiten Teilschritt erfolgt durch Feinfräsen das automatische Verrunden der Strömungseintrittskante 13 zur Bereitstellung der strömungstechnischen Oberfläche. Das Grobfräsen wird auch als Schruppen, das Feinfräsen wird auch als Schlichten bezeichnet. Die oben beschriebene Ermittlung der Fräsbahnen für die reale Gasturbinenschaufel betrifft die Fräsbahnen für das Feinfräsen, also für das automatische Verrunden der Gasturbinenschaufeln im Bereich der Strömungseintrittskanten sowie Strömungsaustrittskanten.

Im Anschluss an die obige Herstellung bzw. Fertigung der angepassten, strömungstechnischen Oberflächen können die Gasturbinenschaufeln durch lineares Reibschweißen an einen Rotor gefügt werden. Auch ist es möglich die Oberflächen der Gasturbinenschaufeln zum Beispiel durch chemisch unterstütztes Gleitschleifen einer Nachbearbeitung zu unterziehen.

## Patentansprüche

1. Verfahren zur Fertigung angepasster, strömungstechnischer Oberflächen an Gasturbinenschaufeln im Bereich einer Strömungseintrittskante (13) und/oder einer Strömungsaustrittskante einer Gasturbinenschaufel (10),
mit den folgenden Schritten:
a) Erzeugen eines Nominalfräsprogramms zur Fertigung strömungstechnischer Oberflächen im Bereich einer Strömungseintrittskante (13) und/oder einer Strömungsaustrittskante für eine ideale Gasturbinensohaufel (10);
b) Vermessen einer realen Gasturbinenschaufel (10) im Bereich einer Strömungseintrittskante (13) und/oder einer Strömungsaustrittskante;
c) Erzeugen eines an die reale Gasturbinenschaufel (10) angepassten Fräsprogramms zur Fertigung strömungstechnischer Oberflächen im Bereich der Strömungseintrittskante (13) und/oder der Strömungsaustrittskante für die reale Gasturbinenschaufel (10), wobei im Schritt b) ermittelte Messwerte zur Anpassung des in Schritt a) erzeugten Nominalfräsprogramms in das Fräsprogramm für die reale Gasturbinenschaufel (10) verwendet werden;
d) Fertigen der strömungstechnischen Oberflächen an der realen Gasturbinenschaufeln (10) im Bereich der Strtimungseintrittskante (13) und/oder der Strömungsaustrittskante durch Fräsen unter Verwendung des in Schritt c) erzeugten Fräsprogramms, **dadurch gekennzeichnet, dass** in einem ersten Teilschritt durch Grobfräsen, insbesondere durch Schruppen, Material im Bereich der Strömungseintrittskante (13) und/oder der Strömungsaustrittskante abgetragen wird, wobei in einem sich hieran anschließenden zweiten Teilschritt durch Feinfräsen, insbesondere durch Schlichten, die Strömungseintrittskante (13) und/oder die Strömungsaustrittskante automatisch verrundet werden, und wobei das Nominalfräsprogramm für den Bereich der Strömungseintrittskante (13) und/oder den Bereich der Strömungsaustrittskante mehrere Nominalfräsbahnen (15, 16, 17) umfasst, nämlich jeweils eine Nominalfräsbahn (16) im Bereich der Saugseite (12), jeweils eine Nominalfräsbahn (15) im Bereich der Druckseite (11) und jeweils mindestens eine zwischen diesen beiden Nominalfräsoahnen geschaltete Nominalfrasbahn (17) zwischen der Saugseite (12) und der Druckseite (11), wobei jede der Nominalfräsbahnen (15, 16, 17) mehrere Nominalbahnpunkte umfasst.

2. Verfahren nach Anspruch 1,
**dadurch gekennzeichnet,**
**dass** in Schritt b) die reale Gasturbinenschaufel (10) derart vermessen wird, dass im Bereich der Strömungseintrittskante (13) und/oder im Bereich der Strömungsaustrittskante an einer Saugseite (12) und an einer Druckseite (11) der Gasturbinenschaufel (10) jeweils eine Messpunktreihe ermittelt wird, wobei jede Messpunktreihe aus mehreren über die Höhe bzw. die Länge der Strömungseintrittskante (13) und/oder der Strömungsaustrittskante verteilten Messpunkten gebildet ist.

3. Verfahren nach Anspruch 2,
**dadurch gekennzeichnet,**
**dass** in Schritt c) für jeden Messpunkt eine Abweichung zwischen der idealen Gasturbinenschaufel und der realen Gasturbinenschaufel ermittelt wird, wobei diese Abweichungen verwendet werden, um das Nominalfräsprogramm in das Fräsprogramm für die reale Gasturbinenschaufel (10) abzuändern.

4. Verfahren nach einem oder mehreren der Ansprüche 2 bis 3,
**dadurch gekennzeichnet,**
**dass** die oder jede im Bereich der Saugseite (12) ermittelte Messpunktreihe zur Änderung der jeweiligen Nominalfräsbahn (16) im Bereich der Saugseite (12) derart verwendet wird, dass jeder Nominalbahnpunkt der jeweiligen Nominalfräsbahn (16), für den ein entsprechender Messpunkt vorliegt, um den Betrag der Abweichung zwischen der idealen Gasturbinenschaufel und der realen Gasturbinenschaufel im Bereich der Saugseite (12) verschoben wird.

5. Verfahren nach Anspruch 4,
**dadurch gekennzeichnet,**
**dass** für Nominalbahnpunkte der jeweiligen Nominalfräsbahn (16), für die kein entsprechender Messpunkt vorliegt, eine Interpolation durchgeführt wird.

6. Verfahren nach einem oder mehreren der Ansprüche 2 bis 5,
**dadurch gekennzeichnet,**
**dass** die oder jede im Bereich der Druckseite (11) ermittelte Messpunktreihe zur Änderung der jeweiligen Nominalfräsbahn (15) im Bereich der Druckseite (11) derart verwendet wird, dass jeder Nominalbahnpunkt der jeweiligen Nominalfräsbahn (15), für den ein entsprechender Messpunkt vorliegt, um den Betrag der Abweichung zwischen der idealen Gasturbinenschaufel und der realen Gasturbinenschaufel im Bereich der Druckseite (11) verschoben wird.

7. Verfahren nach Anspruch 6,
**dadurch gekennzeichnet,**
**dass** für Nominalbahnpunkte die jeweiligen Nominalfräsbahn (15), für die kein entsprechender Messpunkt vorliegt, eine Interpolation durchgeführt wird.

8. Verfahren nach einem oder mehreren der Ansprüche 1 bis 7,
**dadurch gekennzeichnet,**
**dass** für die oder jede zwischen der jeweiligen Nominalfräsbahn (16) der Saugseite und der jeweiligen Nominalfräsbahn (15) der Druckseite (11) vorliegende Nominalfräsbahn (17) zur Anpassung derselben an die reale Gasturbinenschaufel (10) eine Interpolation durchgeführt wird.

9. verfahren nach einem oder mehreren der Ansprüche 5 bis 8,
**dadurch gekennzeichnet,**
**dass** zur Fertigung strömungstechnischer und stetiger Oberflächen im Bereich der Strömungseintrittskante (13) und/oder der Strömungsaustrittskante Spline-Interpolationen durchgeführt werden.

## Claims

1. A method for producing adapted flow surfaces on gas-turbine blades in the region of a flow leading edge (13) and/or in the region of a flow trailing edge of a gas-turbine blade (10),
with the following steps:
a) generating a nominal milling program for producing flow surfaces in the region of a flow leading edge (13) and/or in the region of a flow trailing edge for an ideal gas-turbine blade (10) ;
b) surveying a real gas-turbine blade (10) in the region of a flow leading edge (13) and/or in the region of a flow trailing edge;
c) generating a milling program adapted to the real gas-turbine blade (10) for producing flow surfaces in the region of the flow leading edge (13) and/or in the region of the flow trailing edge for the real gas-turbine blade (10), measured values ascertained in step b) being used for adapting the nominal milling program generated in step a) to the milling program for the real gas-turbine blade (10);
d) producing the flow surfaces on the real gas-turbine blade (10) in the region of the flow leading edge (13) and/or in the region of the flow trailing edge by milling using the milling program generated in step c), **characterised in that** material is removed, in a first partial step, in the region of the flow leading edge (13) and/or in the region of the flow trailing edge by coarse milling, in particular by rough machining, wherein in an ensuing second partial step the flow leading edge (13) and/or the flow trailing edge is/are automatically rounded by fine milling, in particular by smoothing, and wherein the nominal milling program for the region of the flow leading edge (13) and/or for the region of the flow trailing edge comprises several nominal milling tracks (15, 16, 17), namely in each instance a nominal milling track (16) in the region of the suction side (12), in each instance a nominal milling track (15) in the region of the pressure side (11), and in each instance at least one nominal milling track (17) interposed between these two nominal milling tracks between the suction side (12) and the pressure side (11), each of the nominal milling tracks (15, 16, 17) comprising several nominal track points.

2. A method according to Claim 1,
**characterised in that**
in step b) the real gas-turbine blade (10) is surveyed in such a manner that in the region of the flow leading edge (13) and/or in the region of the flow trailing edge on a suction side (12) and on a pressure side (11) of the gas-turbine blade (10) in each instance a series of measuring points is determined, each series of measuring points being formed from several measuring points distributed over the height or the length of the flow leading edge (13) and/or of the flow trailing edge.

3. A method according to Claim 2,
**characterised in that**
in step c) a deviation between the ideal gas-turbine blade and the real gas-turbine blade is ascertained for each measuring point, these deviations being used in order to change the nominal milling program into the milling program for the real gas-turbine blade (10).

4. A method according to one or more of Claims 2 to 3,
**characterised in that**
the or each series of measuring points ascertained in the region of the suction side (12) is used for changing the respective nominal milling track (16) in the region of the suction side (12) in such a manner that each nominal track point of the respective nominal milling track (16) for which a corresponding measuring point is present is displaced by the magnitude of the deviation between the ideal gas-turbine blade and the real gas-turbine blade in the region of the suction side (12).

5. A method according to Claim 4,
**characterised in that**
an interpolation is carried out for nominal track points of the respective nominal milling track (16) for which no corresponding measuring point is present.

6. A method according to one or more of Claims 2 to 5,
**characterised in that**
the or each series of measuring points ascertained in the region of the pressure side (11) is used for changing the respective nominal milling track (15) in the region of the pressure side (11) in such a manner that each nominal track point of the respective nominal milling track (15) for which a corresponding measuring point is present is displaced by the magnitude of the deviation between the ideal gas-turbine blade and the real gas-turbine blade in the region of the pressure side (11).

7. A method according to Claim 6,
**characterised in that**
an interpolation is carried out for nominal track points of the respective nominal milling track (15) for which no corresponding measuring point is present.

8. A method according to one or more of Claims 1 to 7,
**characterised in that**
an interpolation is carried out for the or each nominal milling track (17) that is present between the respective nominal milling track (16) of the suction side and the respective nominal milling track (15) of the pressure side (11) for the purpose of adapting the nominal milling track (17) to the real gas-turbine blade (10).

9. A method according to one or more of Claims 5 to 8,
**characterised in that**
spline interpolations are carried out for the purpose of producing continuous flow surfaces in the region of the flow leading edge (13) and/or in the region of the flow trailing edge.

## Revendications

1. Procédé de fabrication de surfaces adaptées, fluidiques sur des aubes de turbine à gaz dans la zone d'une arête d'entrée d'écoulement (13) et/ou d'une arête de sortie d'écoulement d'une aube de turbine à gaz (10),
avec les étapes suivantes :
a) génération d'un programme de fraisage nominal pour la fabrication de surfaces fluidiques dans la zone d'une arête d'entrée d'écoulement (13) et/ou d'une arête de sortie d'écoulement pour une aube de turbine à gaz idéale (10) ;
b) mesurage d'une aube de turbine à gaz réelle (10) dans la zone d'une arête d'entrée d'écoulement (13) et/ou d'une arête de sortie d'écoulement ;
c) génération d'un programme de fraisage adapté à l'aube de turbine à gaz réelle (10) pour la fabrication de surfaces fluidiques dans la zone de l'arête d'entrée d'écoulement (13) et/ ou de l'arête de sortie d'écoulement pour l'aube de turbine à gaz réelle (10), des valeurs de mesure déterminées à l'étape b) étant utilisées pour l'adaptation du programme de fraisage nominal généré à l'étape a) dans le programme de fraisage pour l'aube de turbine à gaz réelle (10) ;
d) fabrication des surfaces fluidiques sur les aubes de turbine à gaz (10) réelles dans la zone de l'arête d'entrée d'écoulement (13) et/ou de l'arête de sortie d'écoulement par fraisage en utilisant le programme de fraisage généré à l'étape c), **caractérisé en ce que** dans une première étape partielle, de la matière dans la zone de l'arête d'entrée d'écoulement (13) et/ou de l'arête de sortie d'écoulement est enlevée par fraisage grossier, en particulier par dégrossissage, dans une seconde étape partielle suivante, l'arête d'entrée d'écoulement (13) et/ou l'arête de sortie d'écoulement étant automatiquement arrondie par fraisage fin, en particulier par planage, et le programme de fraisage nominal pour la zone de l'arête d'entrée d'écoulement (13) et/ou la zone de l'arête de sortie d'écoulement comprenant plusieurs bandes de fraisage nominal (15, 16, 17) à savoir respectivement une bande de fraisage nominal (16) dans la zone du côté d'aspiration (12), respectivement une bande de fraisage nominal (15) dans la zone du côté de refoulement (11) et respectivement au moins une bande de fraisage nominal (17) montée entre ces deux bandes de fraisage nominal entre le côté d'aspiration (12) et le côté de refoulement (11), chacune des bandes de fraisage nominal (15, 16, 17) comportant plusieurs points de bande nominale.

2. Procédé selon la revendication 1, **caractérisé en ce qu'**à l'étape b), l'aube de turbine à gaz réelle (10) est mesurée de telle manière que dans la zone de l'arête d'entrée d'écoulement (13) et/ou dans la zone de l'arête de sortie d'écoulement sur un côté d'aspiration (12) et sur un côté de refoulement (11) de l'aube de turbine à gaz (10) est déterminée respectivement une rangée de points de mesure, chaque rangée de points de mesure étant formée de plusieurs points de mesure répartis sur la hauteur ou la longueur de l'arête d'entrée d'écoulement (13) et/ou de l'arête de sortie d'écoulement.

3. Procédé selon la revendication 2, **caractérisé en ce qu'**à l'étape c) pour chaque point de mesure, un écart entre l'aube de turbine à gaz idéale et l'aube de turbine à gaz réelle est déterminé, ces écarts étant utilisés pour modifier le programme de fraisage nominal dans le programme de fraisage pour l'aube de turbine à gaz réelle (10).

4. Procédé selon l'une ou plusieurs quelconques des revendications 2 à 3, **caractérisé en ce que** la ou chaque rangée de points de mesure déterminée dans la zone du côté d'aspiration (12) est utilisée pour la modification de la bande de fraisage nominal (16) respective dans la zone du côté d'aspiration (12) de telle manière que chaque point de la bande de fraisage nominal (16) respective, pour laquelle il existe un point de mesure correspondant, est déplacé de la valeur de l'écart entre l'aube de turbine à gaz idéale et l'aube de turbine à gaz réelle dans la zone du côté d'aspiration (12).

5. Procédé selon la revendication 4, **caractérisé en ce que** pour des points de la bande de fraisage nominal respective (16), pour laquelle il n'existe aucun point de mesure correspondant, est réalisée une interpolation.

6. Procédé selon l'une ou plusieurs quelconques des revendications 2 à 5, **caractérisé en ce que** la ou chaque rangée de point de mesure déterminée dans la zone du côté de refoulement (11) est utilisée pour la modification de la bande de fraisage nominal respective (15) dans la zone du côté de refoulement (11) de telle manière que chaque point de la bande de fraisage nominal respective (15), pour laquelle il existe un point de mesure correspondant, est déplacé de la valeur de l'écart entre l'aube de turbine à gaz idéale et l'aube de turbine à gaz réelle dans la zone du côté de refoulement (11).

7. Procédé selon la revendication 6, **caractérisé en ce que** pour des points de la bande de fraisage nominal respective (15), pour laquelle il n'existe pas de point de mesure correspondant, est réalisée une interpolation.

8. Procédé selon l'une ou plusieurs quelconques des revendications 1 à 7, **caractérisé en ce que** pour la ou chaque bande de fraisage nominal (17) se trouvant entre la bande de fraisage nominal respective (16) du côté d'aspiration et la bande de fraisage nominal respective (15) du côté de refoulement (11), une interpolation est réalisée pour son adaptation à l'aube de turbine à gaz réelle (10).

9. Procédé selon l'une ou plusieurs quelconques des revendications 5 à 8, **caractérisé en ce que** pour la fabrication de surfaces fluidiques et continues dans la zone de l'arête d'entrée d'écoulement (13) et/ou de l'arête de sortie d'écoulement sont réalisées des interpolations spline.
